# EUROPÄISCHE PATENTSCHRIFT

(11) **EP 1 547 835 B1**
(45) Veröffentlichungstag und Bekanntmachung des Hinweises auf die Patenterteilung: **09.01.2008**
(21) Anmeldenummer: 04027951.5
(22) Anmeldetag: 25.11.2004
(51) Int. Cl.: B60J 5/04

(54) **Schwenktür oder Schwenkklappe für Fahrzeuge des öffentlichen Personennahverkehrs**
Pivoting door wing for public transport vehicles
Porte pivotante pour véhicule de transport en commun

(30) Priorität: 24.12.2003 DE 20320029 U
(43) Veröffentlichungstag der Anmeldung: 29.06.2005
(73) Patentinhaber: Gebr. Bode GmbH & Co. KG, 34123 Kassel (DE)
(72) Erfinder: Sprenger, Thorsten, 34253 Lohfelden (DE); Simon, Michael, 34260 Kaufungen (DE)
(74) Vertreter: Feder, Wolf-Dietrich

(56) Entgegenhaltungen:
- EP-A- 0 580 221
- EP-A2- 1 293 368
- DE-A1- 3 705 369

## Beschreibung

Die Erfindung betrifft eine Schwenktür oder Schwenkklappe für Fahrzeuge des öffentlichen Personennahverkehrs mit mindestens einem Flügel, der mittels eines mit dem Flügel über mindestens ein Drehgelenk verbundenen Tragelements an einem parallel zum Schwenktürflügel angeordneten drehbaren Antriebsrohr befestigt ist.

Eine derartige Schwenktür ist beispielsweise in DE-A-3 705 369 und in EP 580 221 gezeigt.

Bei den bekannten Schwenktüren dieser Bauart besteht dasTragelement im allgemeinen aus einem Traggestell mit einem Tragrohr, das in vertikaler Richtung parallel zum Schwenktürflügel verläuft und an seinen beiden Enden über Drehgelenke mit vertikaler Drehachse am Schwenktürflügel angelenkt ist. Am Tragrohr sind zwei in unterschiedlichen horizontalen Ebenen liegenden Tragarme fest angeordnet. Die Tragarme sind jeweils über Klemmschellen kraftschlüssig mit dem Antriebsrohr verbunden.

Der Erfindung liegt die Aufgabe zugrunde, eine Schwenktür oder Schwenkklappe mit den eingangs und im Oberbegriff des Patentanspruchs 1 angegebenen Merkmalen so auszubilden, dass das Tragelement in optisch besonders ansprechender Weise ausgestaltet werden kann. Weiterhin sollte eine Gewichtsreduzierung und eine Erleichterung bei der Montage erreicht werden.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, das Tragelement nicht mit mehreren Tragarmen aufzubauen, sondern aus einem oder mehreren Strangpressprofilstücken. Wie weiter unten anhand von Ausführungsbeispielen näher erläutert, können die Strangpressprofilstücke so ausgebildet werden, dass sie sich über den ganzen Abstand erstrecken, der bei den bekannten Tragelementen zwischen den beiden Tragrohren entsteht. Dies eröffnet die Möglichkeit, das Tragelement optisch ansprechend zu gestalten, indem beispielsweise seine Vorderläche mit textilem Material verkleidet werden kann und zumindest die obere Kante der Strangpressprofilstücke mit einer streifenförmigen Abdeckkappe aus Kunststoff versehen werden kann. Die erfindungsgemäße Ausbildung des Tragelements bringt außer einer Gewichtsreduzierung noch ein erhöhtes Maß an Sicherheit, da es nun nicht mehr möglich ist, beispielsweise mit einem Bein oder einem Gepäckstück zwischen die beiden Tragarme zu geraten, was beim Öffnen der Schwenktür zu gefährlichen Unfällen führen kann. Weiterhin hat sich herausgestellt, dass die Montage der erfindungsgemäßen Schwenktür durch die besondere Ausbildung des Tragelements erheblich vereinfacht wird. Schließlich bringt der Aufbau des Tragelements aus ein oder mehreren Strangpressprofilstücken einen erheblichen Vorteil bei der Herstellung und Lagerhaltung. Bei herkömmlichen Schwenktüren müssen für unterschiedliche Türabmessungen Tragarme mit sehr unterschiedlichen Rohrlängen auf Lager gehalten werden. Beim Aufbau des Tragelements aus Strangpressprofilstücken ist es möglich, jeweils einfach Zusatzstücke anzuschweißen. Wie weiter unten erläutert, kann dabei in besonders vorteilhafter Weise das Aneinandersetzen der Strangpressprofilstücke derart erfolgen, dass die aneinander ansetzbaren Schmalseiten mit einer Nut-Feder-Verbindung versehen sind, so dass sie beim Aneinanderansetzen ineinandergreifen und dann in dieser Lage fixiert miteinander verschweißt oder verklebt werden können.

Die Erfindung ist sowohl bei Schwenktüren als auch bei Schwenkklappen, beispielsweise Kofferraumklappen an Autobussen, einsetzbar. Die Schwenktüren oder Schwenkklappen können motorisch oder manuell bewegbar sein.

Im folgenden werden anhand der beigefügten Zeichnungen Ausführungsbeispiele für eine Schwenktür nach der Erfindung und ihrem Aufbau näher erläutert.

In den Zeichnungen zeigen:
Fig. 1 einen Schwenktürflügel mit einem Tragelement zur Befestigung an einem Antriebsrohr;
Fig. 2 einen Schnitt nach der Linie II-II in Fig. 1;
Fig. 3 in perspektivischer, gegenüber Fig. 1 vergrößerter Darstellung das aus Strangpressprofilstücken zusammengesetzte Tragelement gemäß Fig. 1 und 2;
Fig. 4 eine Ausführungsform der Schwenktür als zweiflüglige Tür;
Fig. 5 in explodierter Darstellung das aus drei Strangpressprofilstücken zusammengesetzte Tragelement mit Tragrohr.

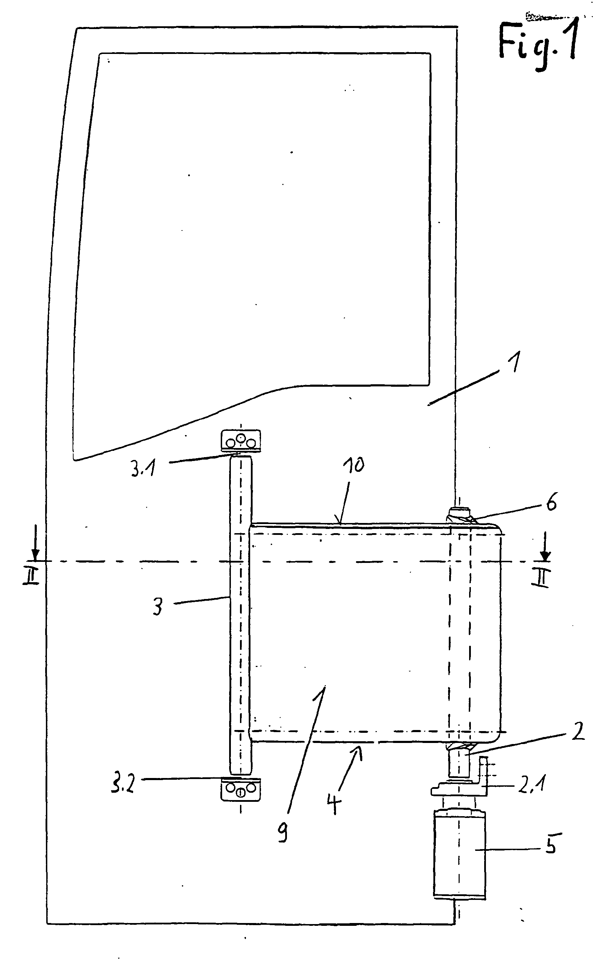

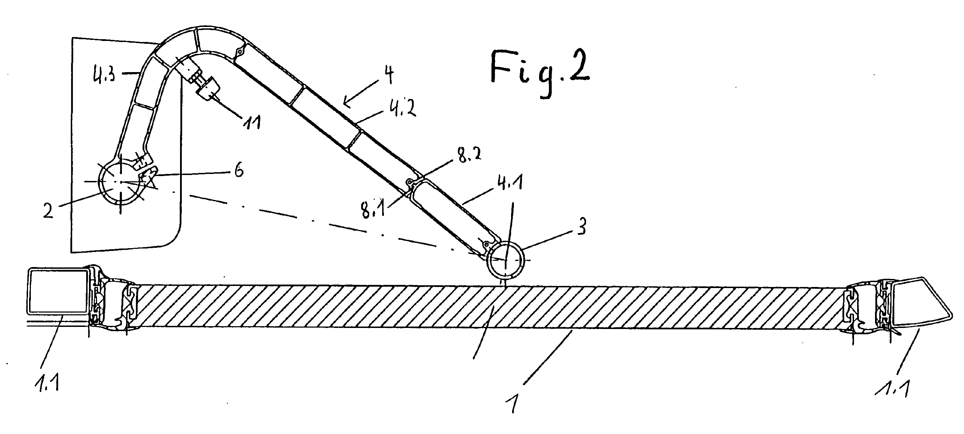

Die Fig. 1 und 2 zeigen einen Schwenktürflügel 1 an einem im übrigen nicht dargestellten Fahrzeug des öffentlichen Personennahverkehrs. Der in Fig. 1 von der Innenseite des Fahrzeugs her gesehene Schwenktürflügel 1 ist über ein Traggestell an einem Türrahmen 1.1 befestigt. Das Traggestell besitzt ein Tragrohr 3, das in vertikaler Richtung parallel zum Schwenktürflügel 1 verläuft und an seinen beiden Enden über Drehgelenke 3.1 und 3.2 mit vertikaler Drehachse am Schwenktürflügel 1 angelenkt ist. Am Tragrohr 3 ist ein Tragelement 4 fest angeordnet, dessen Aufbau weiter unten näher erläutert wird. Das Tragelement 4 ist über eine Klemmschelle 6 kraftschlüssig mit einem Antriebsrohr 2 verbunden. Das Antriebsrohr 2 verläuft ebenfalls in vertikaler Richtung parallel zum Schwenktürflügel 1 und ist in einer Halterung 2.1 drehbar gelagert, die an einer mit dem Türrahmen 1.1 verbundenen Fahrzeugstruktur befestigt ist. Das Antriebsrohr 2 wird von einem Drehantrieb 5 in Drehung versetzt.

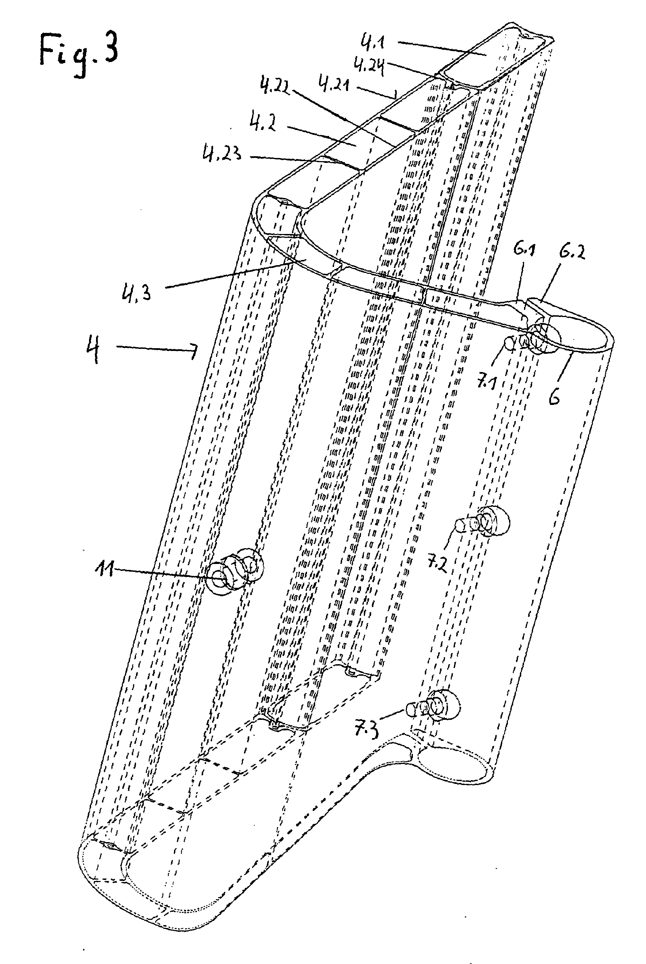

Der Aufbau des Tragelements 4 ist den Fig. 2 und 3 sowie 5 genauer zu entnehmen. Das Tragelement 4 besteht insgesamt aus drei Strangpressprofilstücken 4.1, 4.2 und 4.3, von denen die Strangpressprofilstücke 4.2 und 4.3 einstückig miteinander ver-bunden sind und das Strangpressprofilstück 4.1 als Zusatzstück mit einer Schmalseite an die gegenüberliegende Schmalseite des Strangpressprofilstücks 4.2 angesetzt und mit dieser verschweißt ist. Hierzu ist die Schmalseite des Strangpressprofilstücks 4.2 mit einer Nut 8.2 und die Schmalseite des Strangpressprofilstücks 4.1 mit einer Feder 8.1 versehen. Mit dieser Nut-Feder-Verbindung werden die beiden Strangpressprofilstücke aneinander angesetzt und dann miteinander verschweißt. Die Strangpressprofilstücke 4.1, 4.2 und 4.3 besitzen in üblicher Weise zwei in gleichem Abstand voneinander angeordnete Außenwände mit zwischen ihnen angeordneten Stegen bzw. Seitenwänden. Dieser Aufbau ist Fig. 3 genauer zu entnehmen, wo beispielsweise das Strangpressprofilstück 4.2 die Außenwände 4.21 und 4.22 besitzt, die über Stege 4.23 miteinander verbunden und auf gleichem Abstand gehalten sind. Die Schmalseite ist mit einer Seitenwand 4.24 abgeschlossen. Die Strangpressprofilstücke können aus Aluminium oder aus einer Aluminiumlegierung, aus Stahl oder einer Stahllegierung oder auch aus Kunststoff bestehen.

Im Tragelement 4 sind die Strangpressprofilstücke in horizontaler Richtung aneinander anschließend miteinander verbunden.

Mit dem Antriebsrohr 2 ist das Tragelement 4 über eine einstückig ausgebildete Klemmschelle 6 kraftschlüssig verbunden. Die Klemmschelle 6 besitzt zwei Schenkel 6.1 und 6.2, von denen der Schenkel 6.1 in das Strangpressprofilstück 4.3 integriert ist. Die Klemmung wird durch Schraubverbindungen 7.1, 7.2 und 7.3 erreicht.

Zur optisch ansprechenden Gestaltung kann, wie in Fig. 1 angedeutet, mindestens die dem Fahrzeuginneren zugekehrte Oberfläche 9 des Tragelements 4 mit einer textilen Auflage, beispielsweise einer Teppichauflage, versehen sein, und an der oberen Schmalseite des Tragelements 4 kann eine streifenförmige Abdeckkappe 10 aus Kunststoff etc. angeordnet sein.

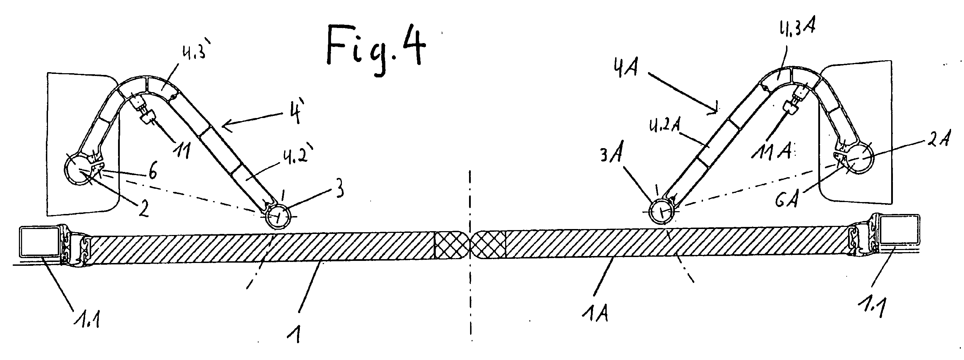

Fig. 4 zeigt, dass die mit dem beschriebenen Tragelement gehalterte Schwenktür auch als zweiflüglige Schwenktür ausgebildet sein kann. Der Aufbau der zweiflügligen Schwenktür nach Fig. 4 ist im Prinzip der gleiche wie anhand der Fig. 1 und 2 geschildert, mit dem Unterschied, dass das Tragelement 4' bzw. 4A etwas kürzer ist, indem das in Fig. 2 dargestellte Zusatzstück 4.1 fehlt.

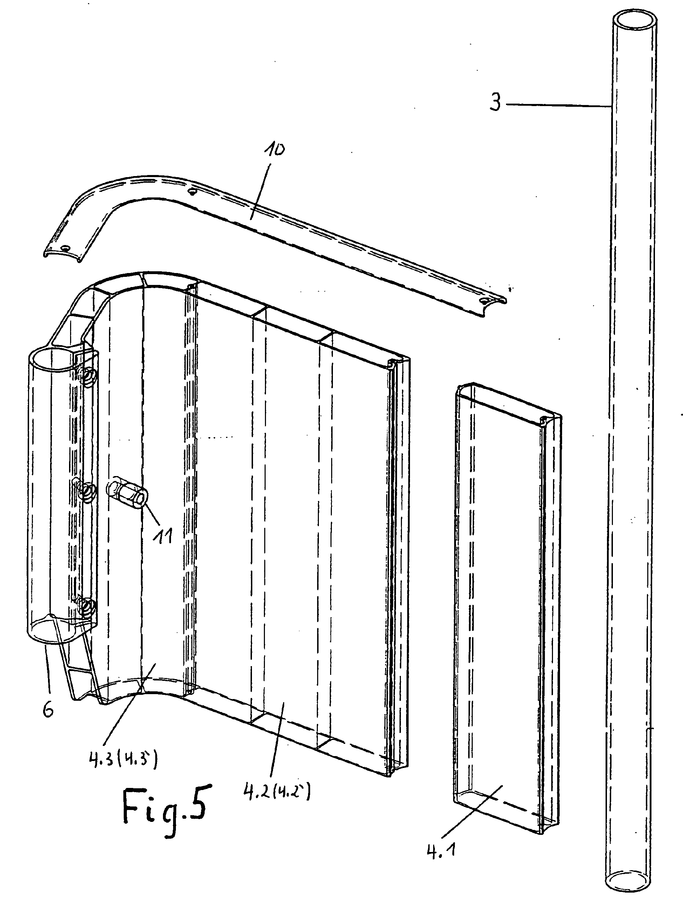

Die Tür besitzt somit die beiden Schwenktürflügel 1 und 1A, einen gemeinsamen Türrahmen 1.1, zwei Antriebsrohre 2 bzw. 2A, zwei Tragrohre 3 bzw. 3A, jeweils ein Tragelement 4' bzw. 4A, das über die Klemmschelle 6 bzw. 6A mit dem Antriebsrohr 2 bzw. 2A verbunden ist. Aus Fig. 5 ist der Unterschied zwischen den Tragelementen der Ausführungsform nach Fig. 1 und 2 und der Ausführungsform nach Fig. 4 noch einmal gut zu ersehen. Im Falle der Ausführungsform nach Fig. 1 und 2 ist an die Teile 4.2 und 4.3 des Tragelements noch das Zusatzstück 4.1 angesetzt, wie oben beschrieben, während bei der Ausführungsform nach Fig. 4 das Tragelement nur aus den Teilen 4.2' und 4.3' aufgebaut ist.

Bei allen dargestellten Ausführungsformen eines Schwenktürflügels ist an der dem Schwenktürflügel 1 bzw. 1A zugewandten Innenseite des Strangpressprofilstücks 4.3 bzw. 4.3A ein Anschlagpuffer 11 bzw. 11A angeordnet.

Bei einem nicht dargestellten Ausführungsbeispiel für eine Schwenkklappe, beispielsweise eine Kofferraumklappe für einen Autobus, kann das Tragelement prinzipiell in der gleichen Weise ausgebildet sein wie beispielsweise in den Fig. 1 bis 3 dargestellt. In einem solchen Falle ist die Anordnung derart, dass das Tragrohr und das Antriebsrohr, die in den Fig.1 und 2 mit den Bezugsziffern 3 und 2 bezeichnet sind, nicht vertikal, sondern horizontal verlaufen, so dass die Schwenkklappe um eine horizontale Achse verschwenkt wird.

## Patentansprüche

1. Schwenktür oder Schwenkklappe für Fahrzeuge des öffentlichen Personennahverkehrs mit mindestens einem Flügel (1) der mittels eines mit dem Flügel über mindestens ein Drehgelenk (3.1, 3.2) verbundenen Tragelements (4) an einem parallel zum Flügel angeordneten, drehbaren Antriebsrohr (2) befestigt ist, **dadurch gekennzeichnet, dass** das Tragelement (4) aus mindestens einem Strangpressprofilstück (4.1, 4.2, 4.3) vorgegebener Höhe und Breite gebildet ist.

2. Schwenktür oder Schwenkklappe nach Anspruch 1, **dadurch gekennzeichnet, dass** das Strangpressprofilstück (4.2) zwei in gleichmäßigem Abstand angeordnete Aussenbleche (4.21, 4.22) mit zwischen ihnen angeordneten Stegen (4.23) bzw. Seitenwänden (4.24) aufweist.

3. Schwenktür oder Schwenkklappe nach Anspruch 1 oder 2, **dadurch gekennzeichnet, dass** das Strangpressprofilstück (4.1, 4.2, 4.3) aus Aluminium oder einer Aluminiumlegierung besteht.

4. Schwenktür oder Schwenkklappe nach Anspruch 1 oder 2, **dadurch gekennzeichnet, dass** das Strangpressprofilstück (4.1, 4.2, 4.3) aus Stahl oder einer Stahllegierung besteht.

5. Schwenktür oder Schwenkklappe nach einem der Ansprüche 1 od. 2 **dadurch gekennzeichnet, dass** das Strangpressprofilstück (4.1, 4.2, 4.3) aus Kunststoff besteht.

6. Schwenktür oder Schwenkklappe nach einem der Ansprüche 1 bis 5, **dadurch gekennzeichnet, dass** das Tragelement (4) aus zwei oder mehr aneinander befestigten Strangpressprofilstücken (4.1, 4.2, 4.3) aufgebaut ist.

7. Schwenktür oder Schwenkklappe nach Anspruch 6, **dadurch gekennzeichnet, dass** das Tragelement (4) aus zwei oder mehr in horizontaler Richtung aneinander anschließenden Strangpressprofilstücken (4.1, 4.2, 4.3) aufgebaut ist.

8. Schwenktür oder Schwenkklappe nach Anspruch 7, **dadurch gekennzeichnet, dass** die aneinander anschließenden Strangpressprofilstücke (4.1, 4.2) mittels einer Nut-Feder-Verbindung (8.1 - 8.2) aneinander fixiert und miteinander verschweißt oder verklebt sind.

9. Schwenktür oder Schwenkklappe nach einem der Ansprüche 1 bis 8, **dadurch gekennzeichnet, dass** das Tragelement (4) über mindestens eine Klemmschelle (6) kraftschlüssig mit dem Antriebsrohr (2) verbunden ist.

10. Schwenktür oder Schwenkklappe nach Anspruch 9, **dadurch gekennzeichnet, dass** die Klemmschelle (6) einstückig ausgebildet und im Bereich ihres einen freien Schenkels (6.1) am Strangpressprofilstück (4.3) befestigt ist.

11. Schwenktür oder Schwenkklappe nach Anspruch 9, **dadurch gekennzeichnet, dass** die Klemmschelle einstückig ausgebildet ist und im Bereich ihrer Symmetrieebene am Strangpressprofilstück befestigt ist.

12. Schwenktür oder Schwenkklappe nach einem der Ansprüche 1 bis 11, **dadurch gekennzeichnet, dass** das Tragelement (4) an mindestens einer seiner Außenseiten (9) mit einer Auflage aus textilem Material oder Kunststoffmaterial versehen ist.

13. Schwenktür oder Schwenkklappe nach einem der Ansprüche 1 bis 12, **dadurch gekennzeichnet, dass** das Tragelement (4) an mindestens einer seiner Schmalseiten an der oberen und/oder unteren Kante mit einer streifenförmigen Abdeckkappe (10) versehen ist.

14. Schwenktür nach einem der Ansprüche 1 bis 13, **dadurch gekennzeichnet, dass** das Tragelement (4) über mindestens ein Drehgelenk (3.1, 3.2) mit vertikaler Drehachse mit dem Schwenktürflügel (1) verbunden ist und an einem vertikal und parallel zum Schwenktürflügel (1) angeordneten, drehbaren, motorisch angetriebenen Antriebsrohr (2) befestigt ist.

## Claims

1. Pivoting door or pivoting flap for local public transport vehicles with at least one wing (1) which is fastened to a rotatable drive tube (2) disposed parallel to the wing by means of a support element (4) connected to the wing via at least one pivot joint (3.1, 3.2), **characterised in that** the support element (4) is formed from at least one extruded section (4.1, 4.2, 4.3) of a predetermined height and width.

2. Pivoting door or pivoting flap according to Claim 1, **characterised in that** the extruded section (4.2) has two outer plates (4.21, 4.22) which are disposed at a uniform spacing from one another and have webs (4.23) or side walls (4.24) disposed between them.

3. Pivoting door or pivoting flap according to Claim 1 or 2, **characterised in that** the extruded section (4.1, 4.2, 4.3) consists of aluminium or an aluminium alloy.

4. Pivoting door or pivoting flap according to Claim 1 or 2, **characterised in that** the extruded section (4.1, 4.2, 4.3) consists of steel or a steel alloy.

5. Pivoting door or pivoting flap according to either of Claims 1 and 2, **characterised in that** the extruded section (4.1, 4.2, 4.3) consists of plastics material.

6. Pivoting door or pivoting flap according to any one of Claims 1 to 5, **characterised in that** the support element (4) is constructed from two or more extruded sections (4.1, 4.2, 4.3) which are fastened to one another.

7. Pivoting door or pivoting flap according to Claim 6, **characterised in that** the support element (4) is constructed from two or more extruded sections (4.1, 4.2, 4.3) which are adjacent to one another in the horizontal direction.

8. Pivoting door or pivoting flap according to Claim 7, **characterised in that** the adjacent extruded sections (4.1, 4.2) are fixed to one another by means of a tongue and groove joint (8.1 - 8.2) and welded or glued together.

9. Pivoting door or pivoting flap according to any one of Claims 1 to 8, **characterised in that** the support element (4) is non-positively connected to the drive tube (2) via at least one clamping clip (6).

10. Pivoting door or pivoting flap according to Claim 9, **characterised in that** the clamping clip (6) is of integral formation and is fastened to the extruded section (4.3) in the region of its one free leg (6.1).

11. Pivoting door or pivoting flap according to Claim 9, **characterised in that** the clamping clip is of integral formation and is fastened to the extruded section in the region of its plane of symmetry.

12. Pivoting door or pivoting flap according to any one of Claims 1 to 11, **characterised in that** the support element (4) is provided on at least one of its outer sides (9) with a covering of textile material or plastics material.

13. Pivoting door or pivoting flap according to any one of Claims 1 to 12, **characterised in that** the support element (4) is provided on at least one of its narrow sides at the top and/or bottom edge with a strip-shaped cover cap (10).

14. Pivoting door according to any one of Claims 1 to 13, **characterised in that** the support element (4) is connected to the pivoting door wing (1) via at least one pivot joint (3.1, 3.2) with a vertical axis of rotation and is fastened to a rotatable, motor-driven drive tube (2) which is disposed vertically and parallel to the pivoting door wing (1) .

## Revendications

1. Porte pivotante ou trappe pivotante pour véhicules de transport en commun comportant au moins un battant (1) qui est fixé à un tube de commande (2) rotatif disposé parallèlement au battant au moyen d'un élément porteur (4) relié au battant via au moins une articulation tournante (3.1, 3.2), **caractérisée en ce que** l'élément porteur (4) est formé par au moins un profilé filé (4.1, 4.2, 4.3) de hauteur et largeur prédéfinies.

2. Porte pivotante ou trappe pivotante selon la revendication 1, **caractérisée en ce que** le profilé filé (4.2) présente deux tôles extérieures (4.21, 4.22) disposées à égale distance munies de traverses (4.23) et/ou de parois latérales (4.24) disposées entre elles.

3. Porte pivotante ou trappe pivotante selon la revendication 1 ou 2, **caractérisée en ce que** le profilé filé (4.1, 4.2, 4.3) est en aluminium ou en alliage d'aluminium.

4. Porte pivotante ou trappe pivotante selon la revendication 1 ou 2, **caractérisée en ce que** le profilé filé (4.1, 4.2, 4.3) est en acier ou en alliage d'acier.

5. Porte pivotante ou trappe pivotante selon l'une quelconque des revendications 1 ou 2, **caractérisée en ce que** le profilé filé (4.1, 4.2, 4.3) est en plastique.

6. Porte pivotante ou trappe pivotante selon l'une quelconque des revendications 1 à 5, **caractérisée en ce que** l'élément porteur (4) est constitué de deux ou plusieurs profilés filés (4.1, 4.2, 4.3) fixés les uns aux autres.

7. Porte pivotante ou trappe pivotante selon la revendication 6, **caractérisée en ce que** l'élément porteur (4) est constitué de deux ou plusieurs profilés filés (4.1, 4.2, 4.3) reliés les uns aux autres dans le sens horizontal.

8. Porte pivotante ou trappe pivotante selon la revendication 7, **caractérisée en ce que** les profilés filés (4.1, 4.2) reliés les uns aux autres sont fixés les uns aux autres au moyen d'une liaison rainure-ressort (8.1 - 8.2) et soudés ou collés les uns aux autres.

9. Porte pivotante ou trappe pivotante selon l'une quelconque des revendications 1 à 8, **caractérisée en ce que** l'élément porteur (4) est relié au tube de commande (2) par liaison de force via au moins un collier de serrage (6).

10. Porte pivotante ou trappe pivotante selon la revendication 9, **caractérisée en ce que** le collier de serrage (6) est réalisé d'un seul tenant et est fixé dans la zone de sa branche libre (6.1) sur le profilé filé (4.3).

11. Porte pivotante ou trappe pivotante selon la revendication 9, **caractérisée en ce que** le collier de serrage est réalisé d'un seul tenant et est fixé dans la zone de son plan symétrique sur le profilé filé.

12. Porte pivotante ou trappe pivotante selon l'une quelconque des revendications 1 à 11, **caractérisée en ce que** l'élément porteur (4) est pourvu d'un revêtement de matériau textile ou plastique au niveau d'au moins un de ses côtés extérieurs (9).

13. Porte pivotante ou trappe pivotante selon l'une quelconque des revendications 1 à 12, **caractérisée en ce que** l'élément porteur (4) est pourvu d'un capot (10) en forme de bandes au niveau d'au moins un de ses côtés étroits sur l'arête supérieure et/ou inférieure.

14. Porte pivotante ou trappe pivotante selon l'une quelconque des revendications 1 à 13, **caractérisée en ce que** l'élément porteur (4) est relié au battant de porte pivotante (1) par le biais d'au moins une articulation tournante (3.1, 3.2) avec axe de rotation vertical et est fixé au niveau d'un tube de commande (2) entraîné par moteur, rotatif, disposé verticalement et parallèlement au battant de porte pivotante (1).
